(19) Europäisches Patentamt
European Patent Office
Office européen des brevets

(11) EP 0 786 879 A2

(12) **EUROPÄISCHE PATENTANMELDUNG**

(43) Veröffentlichungstag:
30.07.1997 Patentblatt 1997/31

(51) Int. Cl.$^6$: **H04J 14/02**, H04B 10/145

(21) Anmeldenummer: 97100631.7

(22) Anmeldetag: 16.01.1997

(84) Benannte Vertragsstaaten:
DE FR GB IT NL

(30) Priorität: 25.01.1996 DE 19602677

(71) Anmelder: **SIEMENS AKTIENGESELLSCHAFT**
**80333 München (DE)**

(72) Erfinder: **Derr, Frowin Dr.-Ing.**
**89075 Ulm (DE)**

(54) **Verfahren und Schaltungs-Anordnung zur Frequenz-Stabilisierung eines WDM-Multiplexers/-Demultiplexers**

(57) Zur Frequenzstabilisierung eines WDM-Multiplexers/-Demultiplexers mit einem Optical Phased Array wird durch Subtraktion der beiden optoelektrisch gewandelten Ausgangs-Referenzsignale zweier einzelkanalseitiger Referenz-Signalkanäle des Optical Phased Arrays, deren Filterkurven sich bei einer der Frequenz eines multiplexseitig eingespeisten Eingangs-Referenzsignals entsprechenden Frequenz schneiden, ein Regelsignal gewonnen, nach Maßgabe dessen der WDM-Multiplexer/-Demultiplexer in seiner Temperatur eingestellt wird.

FIG 4

## Beschreibung

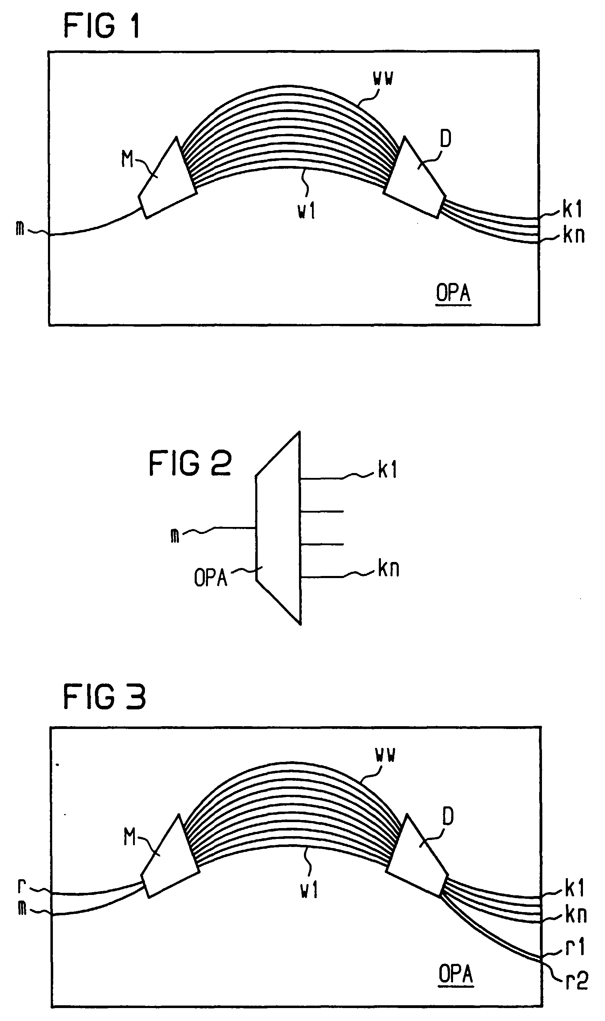

Wesentliche Komponenten von (dichten) WDM(Wavelength Division Multiplex) -Telekommunikationssystemen oder, mit anderen Worten gesagt, von optischen Frequenzmultiplex-(OFDM-)Systemen, sind WDM-Multiplexer/-Demultiplexer zur Zusammenfassung von optischen Kanälen im (dichten) Wellenlängenmultiplex bzw. zur Trennung im (dichten) Wellenlängenmultiplex zusammengefasster optischer Kanäle voneinander (telcom report international 18(1995) Special "ISS'95", 10 ... 14). Solche optischen Frequenzmultiplexer/-demultiplexer können z.B. in $SiO_2$/Si-Technologie in Form von sog. Optical Phase Arrays hergestellt sein; ein solches einen WDM-Multiplexer/-Demultiplexer realisierendes Optical Phased Array OPA weist, wie dies auch in FIG 1 angedeutet ist, im Prinzip auf einem Substrat zwei Flachwellenleiter M, D auf, zwischen deren inneren Stirnflächen eine Mehrzahl von - einen sog. Phase Shifter bildenden - Streifenwellenleitern w1, ..., ww mit sich von Lichtwellenleiter w1, ... zu Lichtwellenleiter ..., ww ändernder Länge verläuft und auf deren einander abgewandte Stirnflächen die kanalindividuellen Lichtwellenleiter k1, ..., kn bzw. der Multiplex-Lichtwellenleiter m stossen (IEEE Photon. Technol. Lett., 7(1992)10, S.1040 ... 1041).
Die Filtercharakteristik ist bei solchen mit einem Optical Phased Array realisierten WDM-Multiplexern/-Demultiplexern auf eine absolute optische Referenzfrequenz zu stabilisieren.

Eine Verstimmung, d.h. eine Verschiebung des gesamten Frequenzübertragungsbandes des WDM-Multiplexers/-Demultiplexers läßt sich prinzipiell durch eine Variation der Temperatur des Optical Phased Arrays erreichen.
Mit einer Temperaturregelung des WDM-Multiplexers/-Demultiplexers ist daher eine gewisse Stabilisierung des WDM-Multiplexers/-Demultiplexers verbunden; eine aktive Regelung der Eigenschaften des WDM-Multiplexers/-Demultiplexers in Bezug auf die optische Frequenz stellt dies indessen nicht dar.

Zweckmäßiger ist der Einsatz einer frequenzmodulierten, absolut stabilen optischen Quelle, beispielsweise einer auf einem atomaren Übergang von Krypton basierenden optischen Quelle (IEEE Photon Technol.Lett., 6(1994)11, S.1383 - 1385), deren Frequenz der optischen Frequenz eines der vom WDM-Multiplexer /-Demultiplexer zusammengefassten bzw. voneinander getrennten optischen Kanäle entspricht; dabei wird der Frequenzmodulationsanteil an den Filterflanken in eine Amplitudenmodulation umgewandelt, die dann mittels eines Lock-In-Verstärkers ausgewertet und zu einer entsprechenden Nachführung der WDM-Multiplexer/-Demultiplexer-Temperatur genutzt werden kann (siehe vergleichsweise IEEE Photon Technol.Lett., 6(1994)11, S.1383 - 1385).
Nachteilig ist dabei, daß hierzu einer der optischen Kanäle als Referenzkanal belegt werden muß und somit nicht als Nutzkanal zur Verfügung steht. Weiterhin ist bei weitem Kanalabstand (z.B. 400 GHz) - und damit großer Durchlaßbandbreite - ein großer Frequenzmodulationshub notwendig, damit eine genügend große FM/AM-Komponente zur Auswertung zur Verfügung steht. Eine reine frequenzmodulation mit hohem Hub ist jedoch mit derzeit verfügbaren Laserquellen nur unter hohem Realisierungsaufwand erreichbar.

Die Erfindung zeigt demgegenüber einen Weg zu einer aufwandgünstigen Realisierung der in WDM-Systemen erforderlichen Stabilisierung der optischen Frequenzmultiplexer/-demultiplexer auf eine gegebene optische Referenzfrequenz.

Die Erfindung betrifft ein Verfahren zur Frequenzstabilisierung eines WDM-Multiplexers/-Demultiplexers mit einem Optical Phased Array; dieses Verfahren ist erfindungsgemäß dadurch gekennzeichnet, daß durch Subtraktion der beiden optoelektrisch gewandelten Ausgangs-Referenzsignale zweier einzelkanalseitiger Referenz-Signalkanäle des Optical Phased Arrays, deren Filterkurven sich bei einer der Frequenz eines multiplexseitig eingespeisten Eingangs-Referenzsignals entsprechenden Frequenz schneiden, ein Regelsignal gewonnen wird, nach Maßgabe dessen der WDM-Multiplexer/-Demultiplexer in seiner Temperatur eingestellt wird.
Eine Schaltungsanordnung zur Frequenzstabilisierung eines WDM-Multiplexers/-Demultiplexers mit einem Optical Phased Array ist erfindungsgemäß dadurch gekennzeichnet, daß das Phased Array einzelkanalseitig zwei Referenz-Wellenleiterausgänge aufweist, für die das Übertragungsverhalten des Phased Arrays derart gewählt ist, daß die den beiden Ausgängen zugehörigen beiden Filterkurven sich gerade bei einer der Frequenz eines multiplexseitig eingespeisten Referenzsignals entsprechenden Frequenz schneiden, und die jeweils über einen optoelektrischen Wandler zu den beiden Eingängen einer Subtraktionsschaltung führen, die ihrerseits zu dem Überwachungseingang einer Regelschaltung zur Temperaturregelung des Optical Phase Arrays führt.

Die Erfindung ermöglicht vorteilhafterweise eine aufwandgünstige Stabilisierung von optischen Frequenzmultiplexern/-demultiplexern auf eine gegebene optische Referenzfrequenz; dabei kann die optische Referenzfrequenz auch im optischen Frequenzbereich der Nutzsignale liegen, ohne indessen deren Durchgang durch den optischen Frequenzmultiplexer/-demultiplexer zu beeinflussen.

Weitere Besonderheiten der Erfindung werden aus der nachfolgenden näheren Erläuterung anhand der Zeichnungen ersichtlich. Dabei zeigen

FIG 1    ein Prinzipschaltbild eines einen WDM-Multiplexer/-Demultiplexer realisierenden bekannten Optical Phased Arrays und

FIG 2    ein Blockschaltbild eines solchen WDM-Multiplexers/-Demultiplexers;

FIG 3    zeigt das Prinzipschaltbild eines einen WDM-Multiplexer/-Demultiplexer gemäß der Erfindung realisierenden Optical Phased Arrays, und

FIG 4    zeigt das Blockschaltbild eines solchen WDM-Multiplexers/-Demultiplexers.

FIG 5    zeigt das Blockschaltbild eines modizierten Ausführungsbeispiels eines solchen WDM-Multiplexers/-Demultiplexers, und

FIG 6    verdeutlicht das Übertragungsverhalten eines Optical Phased Arrays mit vier Kanälen und zwei Referenzausgängen.

FIG 7    zeigt in schematischer Darstellung eine Draufsicht auf eine Besonderheit einer zweckmäßigen Realisierung des Optical Phased Arrays, wozu in

FIG 8    eine günstige Charakteristik skizziert ist.

In FIG 1 ist ein einen WDM-Multiplexer/-Demultiplexer realisierendes Optical Phased Array OPA skizziert, das im Prinzip auf einem Substrat zwei Flachwellenleiter M, D aufweist, zwischen deren inneren Stirnflächen eine Mehrzahl von - einen sog. Phase Shifter bildenden - Streifenwellenleitern w1, ..., ww mit sich von Lichtwellenleiter w1, ... zu Lichtwellenleiter ..., ww ändernder Länge verläuft und auf deren einander abgewandte Stirnflächen die kanalindividuellen Lichtwellenleiter k1, ..., kn bzw. der Multiplex-Lichtwellenleiter m stossen.

Das Blockschaltbild eines solchen WDM-Multiplexers/-Demultiplexers zeigt FIG 2, in der die entsprechenden Schaltungselemente mit den gleichen Bezugszeichen wie in FIG 1 versehen sind, so daß es insoweit keiner weiteren Erläuterung bedarf.

Die in FIG 1 skizzierte Struktur eines Optical-Phased-ArrayMultiplexers/-Demultiplexers wird nun gemäß FIG 3 erweitert, um eine einfache Stabilisierung des WDM-Multiplexers/-Demultiplexers auf eine beliebige Referenzfrequenz zu ermöglichen, wobei diese Frequenz insbesondere auch im Frequenzbereich der Nutzsignale liegen kann, ohne deren Durchgang durch den WDM-Multiplexer/-Demultiplexer zu beeinflußen.

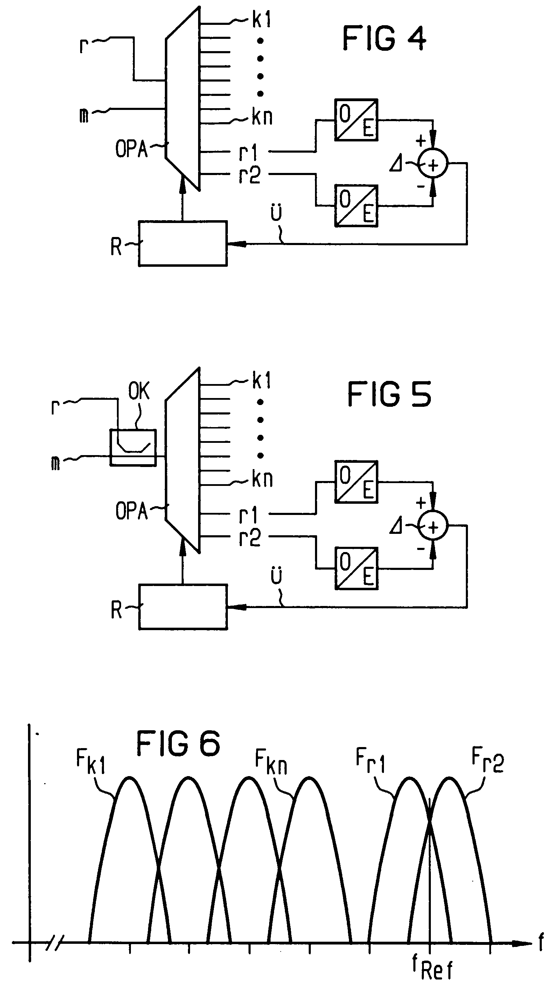

Gemäß FIG 3 weist das Optical Phased Array OPA - neben den schon bei der Erläuterung der FIG 1 genannten, in FIG 3 mit denselben Bezugszeichen versehenen Elementen - einzelkanalseitig zwei Referenz-Wellenleiterausgänge r1, r2 auf, für die das Übertragungsverhalten des Phased Arrays OPA so gewählt ist, daß die den beiden Ausgängen r1, r2 zugehörigen beiden Filterkurven sich gerade bei einer der Frequenz $f_{Ref}$ eines multiplexseitig eingespeisten optischen Referenzsignals entsprechenden Frequenz schneiden. Hierzu sei ein Blick auf FIG 6 geworfen, die das prinzipielle Übersragungsverhalten eines Optical Phased Arrays (OPA in FIG 3) mit vier Nutzkanälen (k1, ..., kn in FIG 3) und zwei Referenzausgängen (r1, r2 in FIG 3) für eine außerhalb des genutzten optischen Frequenzbereichs liegende Referenzfrequenz $f_{Ref}$ durch entsprechende Filterkurven $F_{k1}$, ... $F_{kn}$, $F_{r1}$, $F_{r2}$ verdeutlicht. Um wieder auf FIG 3 zurückzukommen, kann das optische Referenzsignal dem Optical Phased Array OPA multiplexseitig über einen zusätzlichen Fasereingang r zugeführt werden, der so an die innere Phased-Array-Struktur angekoppelt wird, daß das Referenzsignal exakt im Kreuzungspunkt der beiden Filterkurven $F_{r1}$, $F_{r2}$ (in FIG 6) ausgekoppelt wird.

Das Blockschaltbild eines solchen WDM-Multiplexers/-Demultiplexers zeigt FIG 4, in der die entsprechenden Schaltungselemente mit den gleichen Bezugszeichen wie in FIG 3 versehen sind, so daß es insoweit keiner weiteren Erläuterung bedarf. Gemäß FIG 4 führen nun die beiden Referenzausgänge r1, r2 jeweils über einen optoelektrischen Wandler O/E zu den beiden Eingängen einer Subtraktionsschaltung Δ, die ihrerseits zu dem Überwachungseingang ü einer Regelschaltung R zur Temperaturregelung des Optical Phase Arrays OPA führt. Mittels eines Regelsignals, das nach Maßgabe der Differenz der optoelektrisch gewandelten Referenzausgangssignale erzeugt wird, wird dann die Temperatur des Optical Phased Arrays OPA zur Abstimmung seines Frequenzverhaltens auf einen Solltemperaturwert geregelt. Das Übertragungsverhalten der beiden Referenzsignalausgänge r1, r2 ist dabei derart gewählt, daß die Frequenz, bei der sich die beiden Filterkurven ($F_{r1}$, $F_{r2}$ in FIG 6) schneiden, der Referenzfrequenz entspricht. Der Regelkreis stellt dann die Temperatur des Optical Phase Arrays OPA so ein, daß der Kreuzungspunkt der Flanken der beiden Filterkurven $F_{r1}$, $F_{r2}$ tatsächlich gerade bei der Referenzfrequenz $f_{Ref}$ liegt. Für diesen Fall ergeben sich gleiche optische Pegel an den beiden Referenzausgängen r1, r2 und damit gleiche elektrische Signale an den beiden Eingängen der Subtraktionsschaltung Δ, so daß sich bei einer Subtraktion der beiden Signale voneinander das Regelsignal zu Null ergibt.

Wenn, wie dies im Ausführungsbeispiel nach FIG 3 und 4 der Fall ist, das optische Referenzsignal dem Optical Phased Array OPA multiplexseitig über einen zusätzlichen Fasereingang r zugeführt wird, der so an die innere Phased-Array-Struktur angebunden ist, daß das Referenzsignal exakt in den Filter-Kreuzungspunkt der beiden Referenzausgänge r1 und r2 ausgekoppelt wird, ist man in der Wahl der Referenzfrequenz $f_{Ref}$ prinzipiell frei.

Alternativ ist es aber auch möglich, einen gemeinsamen Anschluß für optisches Multiplexsignal und optisches Referenzsignal vorzusehen. Die Referenzfrequenz $f_{Ref}$ muß dann außerhalb des von den Nutzkanälen belegten optischen Frequenzbereiches liegen, wie dies auch aus FIG 6 ersichtlich ist. Das optische Referenzsignal kann dabei, sofern es nicht ohnehin schon in Multiplexsignal enthalten ist, über einen optischen Koppler OK in die Multiplexfaser m eingekoppelt werden, wie dies in FIG 5 angedeutet ist. Im übrigen stimmt das in FIG 5 skizzierte Ausführungsbeispiel mit dem Ausführungsbeispiel gemäß FIG 4 überein, so die Erläuterungen zu diesem in entsprechender Weise auch für das Ausführungsbeispiel gemäß FIG 5 gelten und hier nicht im einzelnen wiederholt werden müssen.

Zusammengefasst gesagt, wird jedenfalls zur Frequenzstabilisierung des mit dem Optical Phased Array OPA (in FIG 3 bis 5) realisierten WDM-Multiplexers/-Demultiplexers durch Subtraktion der beiden optoelektrisch gewandelten Ausgangs-Referenzsignale zweier einzelkanalseitiger Referenz-Signalkanäle des Optical Phased Arrays OPA, deren Filterkurven $F_{r1}$, $F_{r2}$ ( in FIG 6) sich bei einer der Frequenz ($f_{Ref}$) eines multiplexseitig eingespeisten Eingangs-Referenzsignals entsprechenden Frequenz schneiden, ein Regelsignal gewonnen wird, nach Maßgabe dessen der WDM-Multiplexer/-Demultiplexer in seiner Temperatur eingestellt wird.

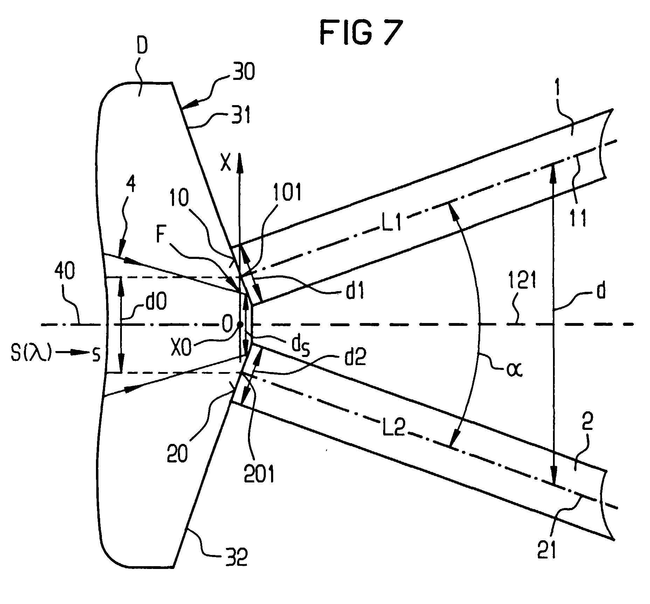

Im Optical Phased Array OPA gemäß FIG 3 stossen die Referenz-Wellenleiterausgänge r1, r2 bzw., genauer gesagt, die zu den eigenlichen Referenzausgängen des Optical Phased Arrays führenden Wellenleiterendabschnitte, in einem sehr geringen Abstand voneinander auf den Flachwellenleiter D, so daß sie in diesem Bereich gewissermaßen eine optische Koppelanordnung bilden, bei der es zu einem Übersprechen zwischen beiden Wellenleiterendabschnitten kommen kann. Ein solches Übersprechen soll indessen zumindest im weiteren Verlauf der Wellenleiterendabschnitte einer solchen Koppelanordnung weitestgehend vermieden sein. Hierzu sind zweckmäßigerweise die Wellenleiterendabschnitte in einem von dem geringen Abstand $d_s$ am Flachwellenleiter aus zunehmenden Abstand voneinander angeordnet, wie dies schematisch in einem Ausführungsbeispiel in FIG 7 verdeutlicht wird.

Nach FIG 7 besteht eine solche optische Koppelanordnung aus einem Paar nebeneinander verlaufender streifenartiger optischer Wellenleiterendabschnitte 1 und 2 mit den nebeneinander angeordneten Enden 10 bzw. 20 zum Einkoppeln von beispielsweise aus einer gemeinsamen Richtung s zugeführter optischer Strahlung S in die Wellenleiterendabschnitte 1 und 2.

Die Enden 10 und 20 sind in einem beispielsweise zwischen Zentren 101 bzw. 201 der Enden 10 und 20 gemessenen Abstand d0 voneinander angeordnet, der so gering bemessen ist, daß in den mit diesem geringen Abstand d0 nebeneinander verlaufenden optischen Wellenleiterendabschnitten 1 und 2 Über- bzw. Nebensprechen auftreten würde. Der geringe Abstand d0 ist beim Beispiel nach FIG 7 so gewählt, daß zwischen den Enden 10 und 20 eine Lücke besteht, er könnte auch so gewählt sein, so daß sich die Enden 10 und 20 lückenlos berühren.

Die Wellenleiterendabschnitte 1 und 2 sind nun in einem von dem geringen Abstand d0 an den Enden 10 und 20 aus zunehmenden Abstand d voneinander angeordnet. Bei der angenommenen Richtung s der einzukoppelten Strahlung S bedeutet dies beispielsweise, daß der Abstand d von den Enden 10 und 20 aus in dieser Richtung s zunimmt.

Die Wellenleiterendabschnitte 1 und 2 weisen z.B. jeweils eine optische Längsachse 11 bzw. 21 auf, die an den Enden 10 bzw. 20 der Wellenleiterendabschnitte 1 und 2 relativ zueinander schräg in Winkel $\alpha$ angeordnet sind, der sich in der angenommenen Richtung s aufweitet.

Bei dem Ausführungsbeispiel nach FIG 7 ist es z.B. so eingerichtet, daß der Winkel $\alpha$ eine in der Richtung s ausgerichtete Winkelhalbierende 121 aufweist und der zunehmende Abstand d der senkrecht zur Winkelhalbierenden 40 gemessene Abstand zwischen den beiden Längsachsen 11 und 12 der Wellenleiterendabschnitte 1 und 2 ist Überdies ist es so eingerichtet, daß die Längsachse 11 des Wellenleiterendabschnitts 1 durch das Zentrum 101 des Endes 10 dieses Endabschnitts 1 und die optische Längsachse 21 des anderen Wellenleiterendabschnitts 2 durch das Zentrum 201 des Endes 20 dieses anderen Endabschnitts 2 geht.

Der Winkel $\alpha$ ist beispielsweise kleiner als ein Aperturwinkel am Ende 10 bzw. 20 eines Wellenleiterendabschnitts 1 und/oder 2 gewählt und kann weniger als 2° betragen. Vorteilhafterweise führt bereits ein Winkel von 1° zu einer wirksamen Unterdrückung des Nebensprechens. Bei einer konkreten Realisierung des Ausführungsbeispiels betrug der Winkel $\alpha$ etwa 1,6°.

Die Enden 10, 20 der Wellenleiterendabschnitte 1 und 2 sind gemäß FIG 7 an eine Stirnfläche 30 eines Schichtwellenleiters D angekoppelt, in welchem die einzukoppelnde Strahlung S den Enden 10 und 20 zugeführt wird. Es sei bemerkt, daß bei einem Vorhandensein von mehr als zwei an die Stirnfläche angekoppelten Wellenleiterendabschnitten die anhand von FIG 7 erläuterte Konfiguration bei jedem Paar benachbarter Enden Anwendung finden kann, bei dem aufgrund eines geringen Abstandes zwischen den Enden dieses Paares Übersprechen auftritt.

Die Stirnfläche 30 weist beispielsweise zwei schräg im Winkel $\alpha$ zueinander stehende Stirnflächenabschnitte 31 und 32 auf, an denen die beiden Wellenleiterendabschnitte 1 und 2 angekoppelt sind. Beispielsweise ist das Ende 10 des Wellenleiterendabschnitts 1 am Stirnflächenabschnitt 31 angekoppelt und das Ende 20 des anderen Wellenleiterendabschnitts 2 am anderen Stirnflächenabschnitt 32 angekoppelt. Es könnte auch umgekehrt sein.

Jeder Wellenleiterendabschnitt weist vorzugsweise eine zum Stirnflächenabschnitt, an den er angekoppelt ist, im wesentlichen senkrecht stehende Längsachse auf. Bezogen auf das Beispiel nach FIG 7 bedeutet dies, daß der an den Abschnitt 31 angekoppelte Wellenleiterendabschnitt 1 die zu diesem Abschnitt 31 im wesentlichen senkrecht stehende Längsachse 11 und der Wellenleiterendabschnitt 2 die zum Abschnitt 32 im wesentlichen senkrecht stehende Längsachse 21 aufweist.

Die Wellenleiterendabschnitte 1 und 2 mit dem zunehmenden Abstand $d_s$ voneinander können nach Erreichen eines für eine Unterdrückung des Übersprechens ausreichnd großen Werts dieses Abstandes d in nicht dargestellte, beispielsweise parallele streifenartige Wellenleiter mit einem Abstand voneinander übergehen, der zumindest gleich dem großen Wert ist. Der Übergang kann beispielsweise durch einen krummlinigen Verlauf der Wellenleiterendabschnitte 1 und 2 hergestellt sein. Dabei ist es zweckmäßig, obgleich nicht notwendig, wenn die Wellenleiterendabschnitte 1 und 2 ausgehend von den Enden 10 und 20 zunächst eine bestimmte Strecke lang geradlinig verlaufen, d.h. eine geradlinig verlaufende Längsachse 11 bzw. 21 aufweisen, und allenfalls dann in einen Verlauf mit gekrümmter Längsachse 11 bzw. 21 übergehen.

Die Anordnung kann beispielsweise so betrieben werden, daß die einzukoppelnde Strahlung S den Enden 10 und 20 der Wellenleiterendabschnitte 1 bzw. 2 in Form eines einen bestimmten Durchmesser $d_s$ aufweisenden Strahls 4 zugeführt wird, der auf eine bestimmte Lage x0 bezüglich der Enden 10, 20 eingestellt wird. Der bestimmte Durchmesser kann größer oder kleiner als ein Durchmesser des Endes eines Wellenleiterendabschnitts sein; vorzugsweise ist der bestimmte Durchmesser des Strahls im wesentlichen gleich dem Durchmesser der in einem Wellenleiterendabschnitt geführten Grundmode. Die Lage des Strahls 4 ist beispielsweise durch die Lage einer Achse 40 dieses Strahls 4 in bezug auf die Enden 10 und 20 bestimmt.

Der Strahl 4 ist vorzugsweise ein kollimierter oder fokussierter Strahl. Beispielsweise wird die einzukoppelnde Strahlung S mit einem Fokus F auf die Enden 10 und 20 der Wellenleiterendabschnitte 1 und 2 fokussiert, der auf die bestimmte Lage x0 bezüglich der Enden 10 und 20 eingestellt wird.

Der Strahl 4 bzw. Fokus F wird vorzugsweise durch Verschieben in Richtung des geringen Abstandes d0, die in der FIG 7 die Richtung der x-Achse ist, auf die bestimmte Lage x0 eingestellt. In der FIG 7 ist die bestimmte Lage x0 beispielsweise so gewählt, daß sie in der Mitte zwischen den Zentren 101 und 201 der Enden 10 und 20 liegt. Diese Mittellage ist in vielen Fällen die bevorzugte. Die bestimmte Lage x0 kann aber von Fall zu Fall von der Mittellage abweichen.

In der FIG 7 ist der Strahl 4 bzw. Fokus F so dargestellt, daß die Achse 40 des Strahls 4, die zugleich eine Achse des Fokus F ist, beispielsweise wie die Winkelhalbierende 121 in der angenommenen Richtung s ausgerichtet ist.

Es sei darauf hingewiesen, daß die Koppelanordnung nicht auf eine bestimmte Richtung s der einzukoppelnden Strahlung S beschränkt ist. Es kann eine bestimmte Richtung s der Strahlung S beispielsweise in der Weise vorgegeben sein, daß sie in einer Soll- oder Haupt-Ausbreitungsrichtung s der Strahlung S besteht, von der gewisse Abweichungen erlaubt sind. Die Achse 40 kann in einem solchen Fall um einen gewissen (nicht dargestellten) Winkel, beispielsweise einen innerhalb eines vorgebbaren oder vorgegebenen Zulässigkeitsbereichs liegenden Winkel, von der Richtung s abweichen. Eine Abweichung von der Richtung s kann von der örtlichen Lage des Strahls 4 bzw. Fokus F bezüglich der Enden 10 und 20, beispielsweise der Lage x seiner Achse 40 auf der x-Achse, abhängen.

In den Fällen, bei denen die Lage des Strahls 4 bzw. Fokus F bezüglich der Enden 10 und 20, beispielsweise die Lage x, von einer Wellenlänge λ der einzukoppelnden Strahlung S abhängt, beispielsweise x = f(λ) gilt, wobei f eine bestimmte oder gewisse Funktion ist, kann der Strahl 4 bzw. Fokus F auf die bestimmte Lage x0 durch Einstellen der Wellenlänge λ der Strahlung S auf einen der bestimmten Lage x0 entsprechenden Wert eingestellt werden.

Vorteihafterweise kann ein definiertes Leistungsverhältnis zwischen einem in einen Wellenleiterendabschnitt eingekoppelten Leistunganteil und einem in den anderen Wellenleiterendabschnitt eingekoppelten Leistungsanteil der den Enden 10 und 20 der beiden Wellenleiterendabschnitte 1 und 2 zugeführten Strahlung S eingestellt werden, beispielsweise das Leistungsverhältnis L1/L2 oder L2/L1 zwischen einem in den Wellenleiterendabschnitt 1 eingekoppelten Leistungsanteil L1 und einem in den anderen Wellenleiterendabschnitt 2 eingekoppelten Leistungsanteil L1.

Diese Möglichkeit basiert auf der auf der Unterdrückung des Übersprechens beruhenden vorteilhaften Eigenschaft der betrachteten Koppelanordnung, nach der das Leistungsverhältnis im Bereich des geringen Abstandes d0 zwischen den Enden 10, 20 eine eindeutige monotone Funktion der Lage x des Strahls 4 bzw. Fokus F bezüglich der Enden 10 und 20 ist. Dabei besteht der besondere Vorteil, daß das Leistungsverhältnis nicht nur im Bereich des geringen Abstandes d0, sondern in einem diesen Bereich enthaltenden größeren Bereich eine monotone Funktion der Lage x des des Strahls 4 bzw. Fokus F ist. Die Anordnung ist aufgrund dieser Tatsache gerade für Zwecke einer Regelung über das Leistungsverhältnis als Soll- und Istgröße hervorragend geeignet, wobei überdies ein großer Fangbereich zur Verfügung steht.

In dem Fall, daß die Lage x im Bereich des Abstandes oder dem größeren Bereich eine eindeutige monotone Funktion f der bestimmten Wellenlänge λ der einzukoppelnden Strahlung S ist, ist das Leistungsverhältnis in diesem Bereich auch eine eindeutige monotone Funktion dieser Wellenlänge λ.

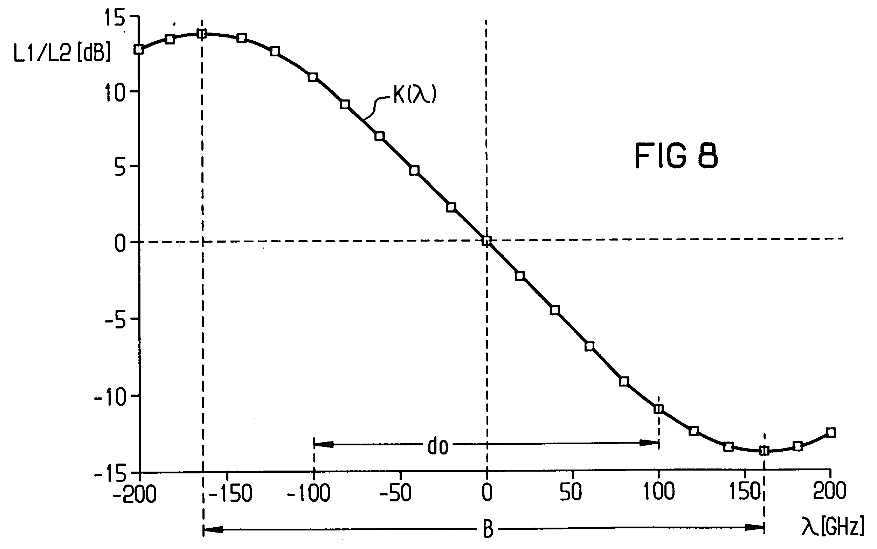

Ein Beispiel für einen derartigen Fall ist in FIG 8 gezeigt, bei welcher beispielsweise das Leistungsverhältnis L1/L2 in Abhängigkeit von der Wellenlänge λ der Strahlung S aufgetragen ist.

Bei diesem Beispiel wurde die Strahlung S mit einem Durchmesser $d_s$ auf diese Enden 10 und 20 fokussiert, der im wesentlichen gleich dem Durchmesser des in den beispielsweise zueinander gleich bemessenen Wellenleiterendabschnitten 1 und 2 jeweils geführten Grundmodes war. Der Durchmesser der in jedem Wellenleiterendabschnitt 1 und 2 geführten Grundmode ist mit dem Durchmesser d1 bzw. d2 dieses Abschnitts 1 bzw. 2 vergleichbar.

Die Lage x des Strahls 4 bzw. Fokus F hing in dem größeren Bereich im wesentlichen linear von der Wellenlänge λ ab.

Der zwischen den Zentren 101 und 201 der Enden 10 und 20 gemessene geringe Abstand d0 betrug beipielsweise 10 μm und war größer als die Summe der Durchmesser der beiden geführten Grundmoden

gewählt. Die 10 μm entsprachen 200 GHz.

Der Nullpunkt 0 der x-Achse in FIG 7 lag genau in der Mitte zwischen den beiden Zentren 101 und 201 der Enden 10 und 20. Diesem Nullpunkt 0 entspricht der Nullpunkt 0 der λ-Achse in FIG 8. Deutlich ist zu entnehmen, daß der Fangbereich B, d.h. der Bereich, in dem das Leistungsverhältnis L1/L2 eine monotone Funktion K(λ) der Wellenlänge λ ist, etwas größer als der Bereich von -150GHz bis +150GHz ist, der einem Bereich der Lage x von -15 μm bis +15 μm entspricht.

## Patentansprüche

1. Verfahren zur Frequenzstabilisierung eines WDM-Multiplexers/-Demultiplexers mit einem Optical Phased Array (OPA),
dadurch gekennzeichnet,
daß durch Subtraktion der beiden optoelektrisch gewandelten Ausgangs-Referenzsignale zweier einzelkanalseitiger Referenz-Signalkanäle (r1, r2) des Optical Phased Arrays (OPA), deren Filterkurven sich bei einer der Frequenz ($f_{Ref}$) eines multiplexseitig eingespeisten Eingangs-Referenzsignals entsprechenden Frequenz schneiden, ein Regelsignal gewonnen wird, nach Maßgabe dessen der WDM-Multiplexer/-Demultiplexer in seiner Temperatur eingestellt wird.

2. Schaltungsanordnung zur Frequenzstabilisierung eines WDM-Multiplexers/-Demultiplexers mit einem Optical Phased Array,
dadurch gekennzeichnet,
daß das Phased Array (OPA) einzelkanalseitig zwei Referenz-Wellenleiterausgänge (r1, r2) aufweist, für die das Übertragungsverhalten des Optical Phased Arrays (OPA) derart gewählt ist, daß die den beiden Ausgängen (r1, r2) zugehörigen beiden Filterkurven ($F_{r1}$, $F_{r2}$) sich gerade bei einer der Frequenz ($f_{Ref}$) eines multiplexseitig eingespeisten Referenzsignals entsprechenden Frequenz schneiden, und die jeweils über einen optoelektrischen Wandler (O/E) zu den beiden Eingängen einer Subtraktionsschaltung (Δ) führen, die ihrerseits zu dem Überwachungseingang (ü) einer Regelschaltung (R) zur Temperaturregelung des Optical Phase Arrays (OPA) führt.

3. Schaltungsanordnung nach Anspruch 2,
dadurch gekennzeichnet,
daß das optische Referenzsignal dem Optical Phased Array (OPA) multiplexseitig über einen zusätzlichen Fasereingang (r) zugeführt wird, der so an die innere Phased-Array-Struktur angekoppelt ist, daß das Referenzsignal im Kreuzungspunkt der genannten beiden Filterkurven ($F_{r1}$, $F_{r2}$) ausgekoppelt wird.

4. Schaltungsanordnung nach Anspruch 2,
dadurch gekennzeichnet,

daß ein gemeinsamer Anschluß für das optische Multiplexsignal und das optische Referenzsignal vorgesehen ist.

5. Schaltungsanordnung nach Anspruch 4,
dadurch gekennzeichnet,
daß das optische Referenzsignal über einen optischen Koppler (OK) in die Multiplexfaser (m) eingespeist wird.

## FIG 1

## FIG 2

## FIG 3

# FIG 4

# FIG 5

# FIG 6

# FIG 7

FIG 8

EP 0 786 879 A2